# EUROPEAN PATENT APPLICATION

(11) **EP 2 688 025 A1**
(43) Date of publication of application: **22.01.2014**
(21) Application number: 12177396.4
(22) Date of filing: 20.07.2012
(51) Int. Cl.: G06Q 20/34

(54) **Method of processing a card-present, card payment transaction**

(71) Applicant: MobiPayPoint Limited, Dooradoyle Limerick (IE)
(72) Inventor: Gormley, Dave, County Louth (IE)
(74) Representative: O'Connor, Michael Donal

(57) **Abstract**

This invention relates to a method of processing a card-present, card payment transaction in a system comprising a card payment terminal having a chip reader and a user interface, a processing server and a plurality of remote payment processors, the processing server being in communication with the card payment terminal and each of the plurality of payment processors. The method comprises the steps of obtaining payment transaction information from the card and the terminal operator and then, instead of initiating a standard card present transaction, combining the payment transaction information into a payment packet and transmitting that packet to a processing server over the internet in a manner similar to a card-not-present transaction. The processing server may then select an appropriate payment processor to process the payment packet. In this way, the card terminal may process payments from a wider range of cards and can be used in multiple jurisdictions.

## Description

### Introduction

This invention relates to a method of processing a card-present, card payment transaction.

Card payment terminals are commonly used to process credit card payments and debit card payment transactions, hereinafter collectively referred to simply as card payment transactions. In order to process a card payment transaction, the card payment terminal receives payment transaction information including the payment amount and information to identify the account that is to be charged before contacting a remote card network to process the card payment request. The card payment terminals are in some cases used to verify the identity of the card user using so called chip card technology.

Although the known card payment terminals and methods of processing card-present, card payment transactions offer a convenient way for many consumers to pay for goods and services, there are a number of technical problems with the existing card payment terminals and methods of processing card-present, card payment transactions. In particular, the known methods conventionally only allow local bank card (debit card) schemes to be processed within national boundaries. This is due in part to the fact that the card payment terminals are designed to process the local bank cards outside of the conventional card network on proprietary local bank card networks. This local focus means that non-local local bank cards cannot be processed with the known machines using the existing methods. For example, a German or a French issued local bank card conventionally cannot be used in a UK card payment terminal because the card payment terminal simply will not know how to communicate with the card's correct local bank card network. Secondly, this means that terminals are not portable from one jurisdiction to another without programmatic changes.

It is an object of the present invention to provide a method of processing a card-present, card payment transaction that overcomes at least some of the problems with the known methods.

### Statements of Invention

According to the invention there is provided a method of processing a card-present, card payment transaction in a system comprising a card payment terminal having a user interface, a processing server and a plurality of remote payment processors, the processing server being in communication with the card payment terminal and each of the plurality of payment processors, the method comprising the steps of:
an operator of the card payment terminal entering payment transaction information into the card payment terminal including a payment amount;
the card payment terminal retrieving additional payment transaction information from the card including the primary account number (PAN);
the card payment terminal handling the card payment transaction as a card-not-present transaction by creating a payment packet including the PAN and the payment amount and transmitting the payment packet to the processing server over the internet;
the processing server handling the card payment transaction as a card-not-present transaction by receiving the payment packet and discerning the card issuing bank identifier, and based on the card issuing bank identifier, determining an appropriate payment processor to send the payment packet to, converting the payment packet into a format specific to the selected payment processor and thereafter transmitting the payment packet to the appropriate payment processor;
the appropriate payment processor attempting to execute the payment transaction and thereafter returning the result of the payment transaction execution to the processing server; and
the processing server returning the result of the payment transaction execution to the payment terminal.

By having such a method, the card payment terminals will be able to process local card schemes outside of their national boundaries. This is achieved by stepping out of the known rigid processing methodology used with the existing terminals for card present transactions and instead treating the card payment transaction as an internet based, card-not-present transaction. A payment packet is generated using the card payment terminal with all the information normally required to complete a card-not-present transaction and that payment packet is sent to the processing server. The processing server can then determine which payment processor to send the payment request to and it is not confined to sending it to a local bank network in the same jurisdiction as the card payment terminal. In this way, the terminal along with the back end processing server is able to process other local card schemes by dropping the payment request into a payment processor based in a relevant country with the appropriate local bank network agreements in place where the payment request can be handled. This enables the local card schemes to be processed outside of their national boundaries and allows the terminals to handle many disparate types of cards. Furthermore, this will allow the terminals to be portable so that they can be used in many jurisdictions without programmatic changes. It will be understood that certain bank cards may be members of card schemes that operate across two or more national boundaries. For those cards, they will also be able to be processed in other countries outside their normal national boundaries or on other incompatible bank card schemes.

In one embodiment of the invention the method comprises the intermediate steps of:
the card owner entering a Personal Identification Number (PIN) into the card payment terminal;
the card payment terminal verifying whether or not the PIN entered by the card owner corresponds to a PIN stored on the chip; and
the card payment transaction only proceeding if the PIN entered by the card owner corresponds to the PIN stored on the chip.

By providing such a method, the method will have the flexibility of a card-not-present transaction but with the security of a card-present transaction executed with "Chip and Pin" authorisation.

In one embodiment of the invention the card payment terminal comprises a magnetic strip reader and in which the step of the card payment terminal retrieving additional payment transaction information from the card comprises the card payment terminal retrieving additional payment transaction information from the magnetic strip on the card.

In one embodiment of the invention there is provided a method in which the card payment terminal has a unique Terminal Identifier (TID) associated therewith and in which the method comprises the step of the card payment terminal transmitting the TID to the processing server as part of the payment packet.

In one embodiment of the invention there is provided a method comprising the additional step of the processing server adding a merchant account identifier (MID) corresponding to the TID to the payment packet to be sent to the appropriate payment processor. By having the processing server add the merchant account identifier to the payment packet, the payment processor will be able to complete the payment transaction. Furthermore, the merchant account identifier associated with the TID can be changed which provides greater flexibility to the card payment terminal owner.

In one embodiment of the invention the processing server further comprises a processing server routing server for routing the payment packet, the processing server routing server determining the appropriate payment processor to send the payment packet to and thereafter transmitting the payment packet to the appropriate payment processor.

In one embodiment of the invention the processing server communicates with the card payment terminal using protocols such as one of XML and HTML.

In one embodiment of the invention the payment packet is transmitted from the card payment terminal to the processing server using one of TLS and SSL.

### Detailed Description of the Invention

The invention will now be more clearly understood from the following description of some embodiments thereof given by way of example only with reference to the accompanying drawings, in which:-
Figure 1 is a diagrammatic representation of a system in which the method according to the invention may be performed.
Figure 2 is a diagrammatic representation of an entire card payment and reconciliation system in which the method according to the invention may be performed.

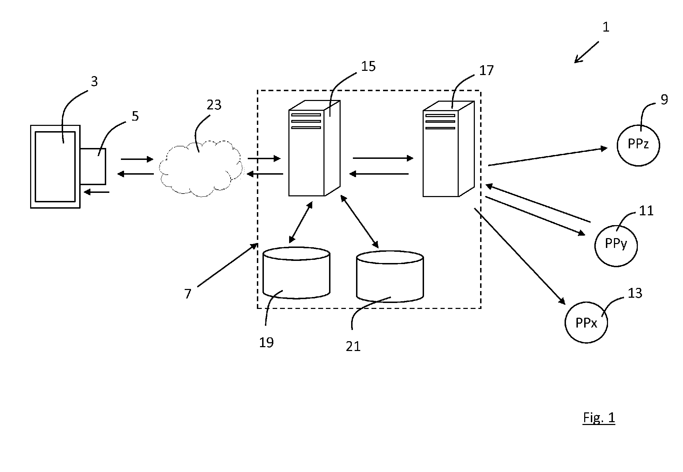

Referring to Figure 1, there is shown a system, indicated generally by the reference numeral 1, comprising a card payment terminal 3 and a card 5 for use in a card payment transaction. The card payment terminal comprises a card reader and a user interface (not shown). The card reader comprises one of a magnetic strip reader, a chip reader or a near field communications (NFC) reader that is able to read a memory device on the card and retrieve information or confirm user inputted data with data stored on the memory device. The system comprises a processing server sub-system, indicated generally by the reference numeral 7, the constituent parts of which are bounded by a dashed line in Figure 1, and a plurality of payment processors 9, 11 and 13. The processing server sub-system 7 further comprises a processing server 15, a processing server routing server 17 and a pair of databases 19, 21. The database 19 stores information relating to the card payment terminals 3 including merchant account details relating to the individual card payment terminals 3. The database 21 stores details relating to the card payment transactions such as the amount, the payment beneficiary and the like.

In use, a card 5 is processed by a card payment terminal 3 and payment transaction information is entered into the card payment terminal 3. The payment transaction information is entered into the card payment terminal through its user interface and additional payment information is obtained by the card payment terminal through the card reader. The card payment terminal 3 generates a payment packet from the payment transaction information. In the present embodiment, the payment packet includes the card verification value (CVV) code, the Primary Account Number (PAN) associated with the card, the name of the card account owner, the expiry date of the card and the payment amount. The payment packet is transmitted to the processing server 15 over the internet 23. The processing server 15 logs data relating to the payment packet in databases 19, 21 and passes the payment packet to the processing server routing server 17. The processing server routing server examines the payment packet and in particular the card issuing bank identifier and determines which payment processor 9, 11, 13 is the most suitable payment processor to send the payment request to. For example, the card issuing bank may be in a different jurisdiction on a separate local bankcard network in which case the processing server routing server will wish to send the payment packet to a processing server that is in communication with that local bank card network.

Once the correct payment processor 9, 11, 13 has been selected, the processing server routing server converts the payment packet into a format suitable for the selected payment processor and thereafter transmits the modified payment packet to the selected payment processor. The processing server routing server waits for a response to the payment packet from the selected payment processor. When a response is received from the payment processor 11, the processing server routing server 17 passes the response on to the processing server 15 which logs the response in database 21 and a payment packet result is transmitted to the card payment terminal 3.

It can be seen from the foregoing that the card payment 3 terminal is not rigidly fixed into a payment processing method whereby it must communicate directly with a card or local bank network if requested to process a local bank card. Instead, sufficient information is obtained to carry out an internet based card-not-present transaction and instead of carrying out a standard card-present transaction, a modified card-not-present transaction is performed. The payment packet is used to determine which payment processor, which may be in a remote jurisdiction, is able to handle the card payment transaction and the payment processor routing server 17 will route the payment request to that payment processor in a format suitable for that payment processor.

The modified card-not-present transaction will have the benefit of the security of having a card present to initiate the card payment transaction. Preferably, the card payment terminal will also perform a "Chip and Pin" PIN entry comparison to further enhance the security of the method. In this way, the method will have the security benefits of the card-present transaction but will not have the disadvantages of the rigid processing methodology of a card-present transaction. This will allow the card payment terminal to be used with many disparate types of cards and furthermore will permit use of the card payment terminal in multiple jurisdictions. Alternatively, a PAN comparison between the PAN stored on the chip and a PAN stored on the magnetic strip may be carried out to obviate the possibility of fraud and further enhance the security of the method according to the invention.

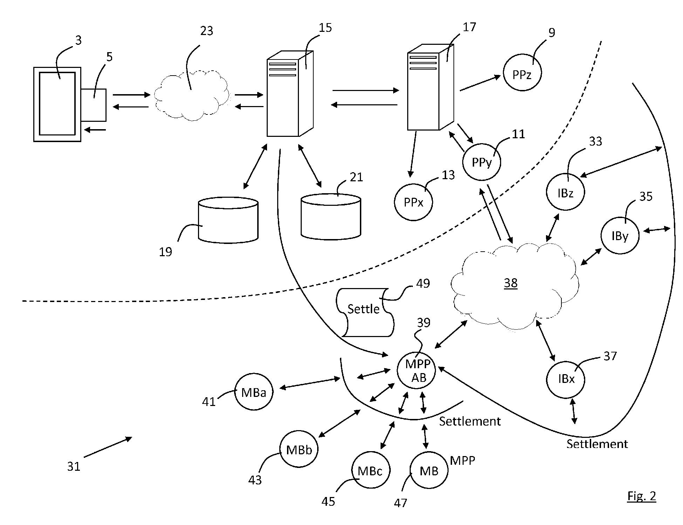

Referring now to Figure 2, there is shown a diagrammatic representation of an entire card payment and reconciliation system in which the method according to the invention may be performed, indicated generally by the reference numeral 31, where like parts have been given the same reference numeral as before. The system 31 further comprises a plurality of card issuing banks 33, 35, 37 that issue cards to their users and a card network 38. It is envisaged that one or more of the issuing banks 33, 35, 37 may be located in the same jurisdiction as the processing server 15 and the card payment terminal 3 and one or more of the issuing banks 33, 35, 37 may be located in a different jurisdiction to the processing server 15 and the card payment terminal 3. The system 31 comprises an acquiring bank 39 and a plurality of merchant accounts 41, 43, 45 and 47. One of the merchant accounts, in this case merchant account 47 is associated with the processing server 15 operator whereas the remaining merchant accounts 41, 43 and 45 are associated with the operators of the card payment terminals 3 (only one of which is shown). There is further shown a settlement file 49 which is transmitted to the acquiring bank as part of the settlement process which will be described in greater detail below.

In use, a chip & PIN card 5 is inserted into the card payment terminal 3 and the operator of the card payment terminal is prompted to enter the CVV (card verification value) from the card into the card payment terminal 3. The operator is then prompted by the user interface on the card payment terminal 3 to enter the amount to charge to the card account. Preferably, the operator will pass the card payment terminal 3 to the consumer for PIN entry so that a PIN comparison with the PIN on the chip can be performed. Once the PIN has been entered and verified locally by the terminal in a departure from standard card-present transactions a payment packet including the CVV is built and transferred to the processing server 7 over the internet 23. The card payment terminal 3 will wait for a response to it's payment request.

The processing server 15 examines the payment packet and records the payment attempt in databases 19, 21. The processing server 15 then passes the payment packet to the processing server routing server 17. The processing server routing server examines the card details in the payment packet and decides which payment processor 9, 11, 13 is best placed to process the card payment transaction request. The processing server routing server then repackages the payment packet into a format that the selected payment processor 9, 11, 13 can understand and routes the payment request to that payment processor. In this case, the payment request has been routed to payment processor 11 (PPy). The processing server routing server 17 waits for a response to the payment request.

The payment processor 11 (PPy) then enters a process to charge the card details received in the payment packet from the processing server routing server. At this stage, the payment processor 11 takes over the payment process. The modified payment packet is passed into this process and the manner in which the payment request is subsequently processed is to a large extent not particularly relevant to the operation of the present invention. The modified payment request is sent to the card network 38 and the card network 38 returns details of the appropriate issuing bank 33, 35, 37 and the acquiring bank 39. The acquiring bank will be a holding bank specific to the processing server 15 operator. The issuing bank, in this case issuing bank 35 (IBy, customer card bank) is asked if there are sufficient funds in the account corresponding to the card 5 and if there are sufficient funds, to process a payment on the customer's account. The beneficiary bank, in this case the acquiring bank 39, is listed to receive the payment on settlement by the issuing bank 35 (IBy).

A response to this payment process is passed back to the payment processor 11 which is then passed back to the processing server routing server 17. Each payment request has a unique transaction number both from processing server side and from the payment processor that was used for the charge. These unique transaction numbers are stored in database 21 and can be used to provide accounting information to the card payment terminal merchant as well as for processing a refund if need be. The processing server 15 receives the response from the processing server routing server 17. This response is logged in database 21 regardless of the outcome. The payment transaction result is then packaged and passed back to the card payment terminal 3. The card payment terminal 3 displays the result on the user interface. A receipt is automatically printed (if a receipt printer has been associated with the terminal). The receipt can be either a successful charge or a rejection. Regardless of the result, the card payment terminal prompts for the card 5 to be removed from the card payment terminal as the transaction attempt is complete. If successful a settlement notification 49 is generated by the processing server and sent to the acquiring bank 39, which in this case also acts as a holding bank.

On card payment terminal initialisation, the operator will be asked to associate a settlement account 41, 43, 45 with the terminal. These bank account details are associated with the terminals TID and stored in database 19 of the processing server 7. These bank account details are used to build the settlement file 49. If the payment request has been successful, the merchant bank account 41, 43, 45 details associated with the terminals TID (Terminal ID) used to process the payment are taken from the database 19 and the payment details, amount etc. are taken from the database 21. These details are packaged and sent to the acquiring/holding bank 39 for fund settlement.

When the issuing banks 33, 35, 37 settle payments they have on file for card 5 holder accounts, these funds are transferred from the respective customer accounts in the issuing banks 33, 35, 37 to the acquiring/holding bank 39. When the acquiring/holding bank 39 receives the funds it compares the originating account with the settlement details received earlier from the processing server 15 and then settles with these accounts. The holding bank 39 waits for settlements on each transaction before processing a settlement for those funds. Once a settlement request that has been received matches settlement funds that have been received from the card issuing banks, the holding bank 39 disburses the funds to the bank destination 41, 43, 45 specified in the settlement file 49. Prior to settlement, fees specified in the settlement 49 file are charged and the remaining fund amount is pushed to the merchants account 41, 43, 45. The fees that were deducted are pushed to a settlement account 47 associated with the operator of the processing server.

It can be seen from the foregoing that the method according to the invention obviates the problems of the card payment terminals being unable to process card payment requests with local bank cards from other inaccessible jurisdictions. Furthermore, the card payment terminal will be able to be used in other jurisdictions if desired.

It will be further understood that various modifications could be made to the embodiments described above without departing from the spirit of the invention. For example, it is envisaged that multiple processing server sub-systems and multiple payment processors could be provided. For example, one or more processing server sub-systems 7 could be provided in each jurisdiction that it was intended for the card payment terminal to operate. In the embodiments described, the card payment terminal has a chip reader however it could also have a magnetic strip swipe reader or NFC reader and payment transaction details may be obtained from a magnetic strip on the card or NFC chip as well as or instead of the chip if desired.

Throughout the specification, reference is made to the non-local local bank cards or local bank card schemes being processed outside their national boundaries. It will be understood that this is one illustrative embodiment of the present invention and is representative of one limitation, specifically a geographical limitation, which is overcome by the present invention. Typically, bank card schemes in one jurisdiction are incompatible with bank card schemes in other jurisdictions. However, the present invention is operable to overcome incompatibilities with numerous disparate types of bank card schemes. For example, certain bank card schemes within the same national boundaries will not operate on other bank card schemes within the same national boundaries. Similarly, some bank card schemes operate across multiple countries and therefore across one or more national boundaries. However these bank card schemes may not operate across other geographical boundaries or indeed with other bank card schemes within the same geographical boundaries. The present invention effectively provides a method of processing card payment transactions that is bank card scheme agnostic. It will allow a card from a local bank card scheme to be processed on an otherwise incompatible other bank card scheme in the same jurisdiction within the same geographical boundaries as well as allowing cards from bank card schemes in one jurisdiction to be processed on otherwise incompatible bank card schemes in other jurisdictions.

It will be understood that the method according to the present invention will be performed largely in software and therefore the present invention extends also to computer programs, on or in a carrier, comprising program instructions for causing a computer to carry out steps of the method, in particular the monitoring steps, the provision of the signal strength indicator step and the generation of the coverage map step. The computer program may be in source code format, object code format or a format intermediate source code and object code. The computer program may be stored on or in a carrier, in other words a computer program product, including any computer readable medium, including but not limited to a floppy disc, a CD, a DVD, a memory stick, a tape, a RAM, a ROM, a PROM, an EPROM or a hardware circuit. In certain circumstances, a transmissible carrier such as a carrier signal when transmitted either wirelessly and/or through wire and/or cable could carry the computer program in which cases the wire and/or cable constitute the carrier.

It will be further understood that the present invention may be performed on two, three or more machines with certain parts of the computer-implemented method being performed by one machine and other parts of the computer-implemented method being performed by another device. The devices may be part of a LAN, WLAN or could be connected together over a communications network including but not limited to the internet. Many of the method steps could be performed "in the cloud", meaning that remotely located processing power may be utilised to process certain method steps of the present invention. Accordingly, it will be understood that many of the method steps may be performed remotely, by which it is meant that the method steps could be performed either on a separate machine in the same locality or jurisdiction or indeed on a separate machine or machines in one or several remote jurisdictions. For example, the card payment terminal and the processing server may be in one jurisdiction whereas the payment processor may be located in another jurisdiction. The card payment terminal, the processing server and the payment processor may all be in different jurisdictions. The present invention and claims are intended to also cover those instances where the method is performed across two or more machines or pieces of apparatus located in one or more jurisdictions and those situations where the parts of the system are spread out over one or more jurisdictions.

Throughout this specification, the term Card Verification Value (CVV) code has been used however it will be understood that many different terms and acronyms are used to describe the same code, including, but not limited to CVV2, the Card Verification Code (CVC / CVC2), the Card Code Verification (CCV), the Card Security Code (CSC), the Card Verification Data (CVD), the Card Verification Value Code (CVVC) or simply the Verification Code (V-Code). In this specification, the CVV code is a code not stored on the magnetic strip but instead is printed on the card itself. For Mastercard ®, Visa @ and some other Credit and Debit cards, presently, the CVV is a three digit code printed on the rear of the card on the signature strip. Other card providers, such as American Express ®, presently print a four digit CVV code on the front right hand side of the card.

In this specification the terms "include, includes, included and including" and the terms "comprise, comprises, comprised and comprising" are all deemed totally interchangeable and should be afforded the widest possible interpretation.

The invention is in no way limited to the embodiment hereinbefore described but may be varied in both construction and detail within the scope of the appended claims.

## Claims

1. A method of processing a card-present, card payment transaction in a system comprising a card payment terminal having a user interface, a processing server and a plurality of remote payment processors, the processing server being in communication with the card payment terminal and each of the plurality of payment processors, the method comprising the steps of:
an operator of the card payment terminal entering payment transaction information into the card payment terminal including a payment amount;
the card payment terminal retrieving additional payment transaction information from the card including the PAN;
the card payment terminal handling the card payment transaction as a card-not-present transaction by creating a payment packet including the PAN and the payment amount and transmitting the payment packet to the processing server over the internet;
the processing server handling the card payment transaction as a card-not-present transaction by receiving the payment packet and discerning the card issuing bank identifier, and based on the card issuing bank identifier, determining an appropriate payment processor to send the payment packet to, converting the payment packet into a format specific to the selected payment processor and thereafter transmitting the payment packet to the appropriate payment processor;
the appropriate payment processor attempting to execute the payment transaction and thereafter returning the result of the payment transaction execution to the processing server; and
the processing server returning the result of the payment transaction execution to the payment terminal.

2. A method as claimed in claim 1 in which:
the step of the operator of the card payment terminal entering payment transaction information into the card payment terminal includes the additional step of the operator entering a chip verification value (CVV) code of a card used to make the payment; and in which
the step of the card payment terminal handling the card payment transaction as a card-not-present transaction by creating a payment packet further comprises the card payment terminal creating a payment packet including the CVV code of the card used to make the payment.

3. A method as claimed in claim 1 or 2 in which the method comprises the intermediate steps of:
the card owner entering a Personal Identification Number (PIN) into the card payment terminal;
the card payment terminal verifying whether or not the PIN entered by the card owner corresponds to a PIN stored on the chip; and
the card payment transaction only proceeding if the PIN entered by the card owner corresponds to the PIN stored on the chip.

4. A method as claimed in any preceding claim in which the step of the card payment terminal retrieving additional payment transaction information from the card including the PAN is carried out using NFC.

5. A method as claimed in claims 1 to 3 in which the card payment terminal comprises a magnetic strip reader and in which the step of the card payment terminal retrieving additional payment transaction information from the card comprises the card payment terminal retrieving additional payment transaction information from the magnetic strip on the card.

6. A method as claimed in claim in any preceding claim in which the card payment terminal has a unique Terminal Identifier (TID) associated therewith and in which the method comprises the step of the card payment terminal transmitting the TID to the processing server as part of the payment packet.

7. A method as claimed in claim 6 comprising the additional step of the processing server adding a merchant account identifier (MID) corresponding to the TID to the payment packet to be sent to the appropriate payment processor.

8. A method as claimed in any preceding claim in which the processing server further comprises a processing server routing server for routing the payment packet, the processing server routing server determining the appropriate payment processor to send the payment packet to and thereafter transmitting the payment packet to the appropriate payment processor.

9. A method as claimed in any preceding claim in which the processing server communicates with the card payment terminal using one of XML and HTML.

10. A method as claimed in any preceding claim in which the payment packet is transmitted from the card payment terminal to the processing server using one of TLS and SSL.
